# EUROPEAN PATENT APPLICATION

(11) **EP 4 802 886 A1**
(43) Date of publication of application: **09.09.2026**
(21) Application number: 24885066.1
(22) Date of filing: 21.10.2024
(51) Int. Cl.: A01K 13/00

(54) **AUTOMATIC OR MANUAL BATHING CUBICLE FOR PETS WITH OZONISED WATER**

(30) Priority: 30.10.2023 ES 202331907 U
(71) Applicant: Gonzalez Barroso, Pedro Luis, 43110 La Canonja (Tarragona) (ES)
(72) Inventor: Gonzalez Barroso, Pedro Luis, 43110 La Canonja (Tarragona) (ES)
(74) Representative: Ruo, Alessandro
(86) International application number: PCT/ES2024/070641
(87) International publication number: WO 2025/093790

(57) **Abstract**

The present invention relates to an automatic or manual bathing cubicle for pets with ozonised water, consisting of a cubicle comprising an upper cover (1) and another lower cover (2) equipped with hinges to allow the user to insert the animal and position it for bathing, and a service door. The cubicle is characterised in that it comprises an emergency stop button (6) which stops the washing if there is a risk, as well as comprising a touch screen (4) connected to a computer for programming the bath and an RFID technology card reader (7) for payment and registration of the bath, and a hot air outlet (8) to which a manual dryer nozzle is attached, as well as a hot water outlet (9) for managing manual bathing, to which a manual hot water dispensing gun is attached, and in that the water in the automatic washing process is distributed by pressure diffusers that generate a water spray and are actuated by solenoid valves (14 and 15), comprising an ozone generator, said ozone being injected into and mixed with the water by means of a venturi, the ozone thus penetrating the dermis of the animal.

## Description

### OBJECT OF THE INVENTION

The present invention relates to an automatic or manual bathing cubicle for pets with ozonised water and proposes a solution for bathing dogs that is more convenient, adaptable, spacious and accessible.

Said cubicle has been optimised for bathing dogs, adapting to their coat needs and tolerance, being able to alternate between the automatic system and the manual system at any time. If manual drying is desired, one of the dryers is activated, with hot air exiting through a tube with a nozzle.

The cubicle is equipped with a touch screen, an RFID card reader, a computer and software that controls operation through a control PCB which activates the various components throughout the washing cycle, such as presence sensors, door sensors, the ozone generator, the solenoid valves to allow the passage of water, the drain pump, the float switch, the RGB LEDs, temperature resistors, temperature sensors and dryers. The plumbing part comprises a pressure switch valve for the water inlet, a thermostatic valve and a water heater.

The industrial application of this invention lies within the sector of bathing equipment and devices for pets, and more specifically, automatic bathing devices for pets which may also be manual and ozonised.

### BACKGROUND OF THE INVENTION

Although no invention identical to the one described has been found, the documents identified that reflect the prior art relating to it are set out below.

In this sense, document ES1213667A1 refers to a hygienic cubicle for pets, characterised by consisting of a modular system comprising: - a base module, which has a floor with a surface with protuberances on which there rests a semi-rigid plate that provides a slight inclination, - sides, - connection means for connection to a drain, as well as connections for water intake to which a flexible hose is connected for washing and cleaning inside the cubicle, - a support bar on the upper part that acts as a structural reinforcement and allows the attachment of the pet's leash, where - one of the side modules is a door that folds downwards and outwards such that it generates a ramp through which the pet is introduced into the cubicle, and - a disposable flexible sheet is arranged on the semi-rigid plate.

PE2021-0026 describes a disinfection device for pets, characterised in that it comprises a disinfection chamber with a container with a built-in sprayer for spraying disinfectant liquid arranged in the upper part of the chamber, with an outlet inside the chamber where the container with the built-in sprayer is located; a manual valve for spraying in manual mode connected to the container with a built-in sprayer; a disinfectant liquid collection container inside the chamber in the lower part thereof; an entry door and an exit door located on the walls of the chamber; and a control device located on the outside of the disinfection chamber (5) for timing the spraying in automatic mode.

ES2278908 A1 proposes a station for conditioning, washing, disinfection, deparasitation and hydromassaging of animals, characterised in that said station is made with panels that insulate it from the outside, and comprises a glassed module where it is possible to condition the animals before and after they are washed, further comprising the washing enclosure itself, and the control panel, which is equipped with a manually-operated button to begin the disinfection cycle before each wash, and an emergency stop button, as well as token slots for washing, rinsing and drying and for additional drying, a sequential cycle system in which the entire unit is controlled by a programmable logic controller (PLC), equipped with a remote communication system and an unpleasant odour extractor; another extractor controlled by an automated hygrometer to extract the internal humidity level, a variable frequency drive-converter, as well as indicators of the maximum and minimum levels of the hot water maintenance unit; inside the enclosure there is installed a load cell that is activated by the weight of the animal, by means of the rotating and folding floor, such that the internal disinfection of the washing enclosure is not allowed while there is an animal inside; the enclosure roof is inclined and is equipped with spray nozzles, through which the water is projected and which are removable and self-cleaning; the application of the gels or cleaning products is automatically or manually controlled; in addition, the hydraulic circuit comprises safety means, check valves, manual valves and solenoid valves, a water pressure and flow rate regulator, a motor pump for washing, rinsing, recirculation and drainage, as well as a thermostatic mixing valve; a system for charging by means of cards, tokens or coins, washing and drying counters, a device for removing lime.

WO/2003/079774 describes a cleaning station comprising a glass enclosure in which the animals are prepared before and after washing, comprising the actual washing enclosure and a control panel which are controlled by a controller or PLC, in which, furthermore, prior to each washing, the interior of the enclosure is disinfected. It furthermore has safety means for both the hydraulic circuit and the electronics which are actuated when the door of the enclosure or the electrical panel is opened, as well as a variable frequency drive/converter which can be used to adjust the flow of air and water, and moisture and unpleasant odour extractors.

Conclusions: As the research carried out shows, none of the documents found solves the problems raised in the same way as the proposed invention.

### DESCRIPTION OF THE INVENTION

The automatic or manual bathing cubicle for pets with ozonised water, which is the object of the present invention, consists of a cubicle that allows dogs to be bathed that is more convenient, adaptable, spacious and accessible. Said cubicle has been optimised for bathing dogs, adapting to their coat needs and tolerance, being able to alternate between the automatic bathing system and the manual bathing system at any time. The water is distributed by pressure diffusers that generate a water spray and are actuated by solenoid valves, and comprises an ozone generator, said ozone being injected and mixed with the water by means of a venturi. This process changes the properties of the water, the ozone thus penetrating the dermis of the animal. The unit can dose three types of shampoo which vary according to tailored to the coat and needs of the animal. Before the bath begins, the cubicle undergoes a bactericidal disinfection process as a hygiene measure ensuring that any potential harmful germs are eliminated. Both the shampoos and the bactericidal disinfectant are injected through 4 independent dosing pumps. The automatic drying system consists of 2 turbines and 2 resistors that heat the air to an electronically controlled temperature, this drying process generates 62% less noise than a standard dog grooming dryer, allowing the dog to enjoy its bath while reducing stress during the process. If manual drying is desired, one of the dryers is activated, with hot air exiting through a tube with a nozzle.

The cubicle is equipped with a touch screen, an RFID card reader, a computer and software that controls operation through a control PCB which activates the various components throughout the washing cycle, such as presence sensors, door sensors, the ozone generator, the solenoid valves to allow the passage of water, the drain pump, the float switch, the RGB LEDs, temperature resistors, temperature sensors and dryers. The plumbing part comprises a pressure switch valve for the water inlet, a thermostatic valve and a water heater.

### BRIEF DESCRIPTION OF THE DRAWINGS

For a better understanding of the present description, drawings are attached that depict a preferred embodiment of the present invention:

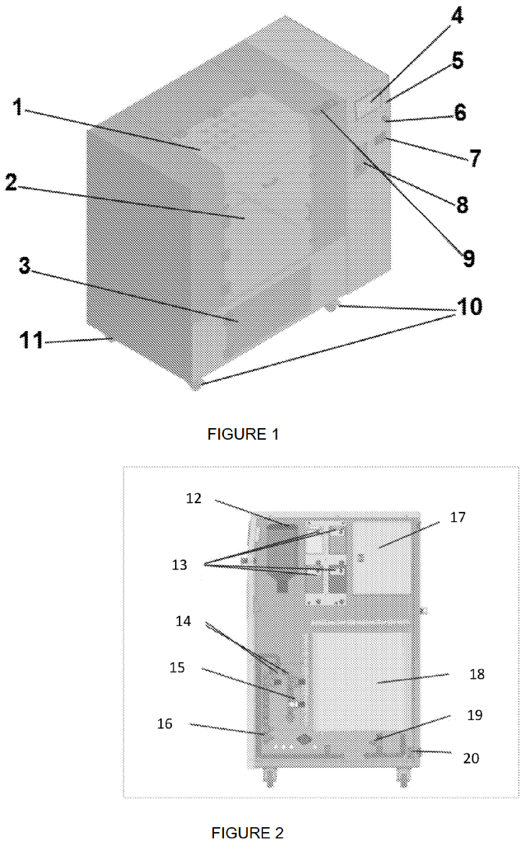

- Figure 1:: Front elevation view of the cubicle.
- Figure 2:: Front cross-section view of the cubicle

The reference numbers appearing in said figures correspond to the following constituent elements of the invention:
1- Upper cover
2- Lower cover
3- Service door
4- Screen
5- XL side
6- Emergency stop button
7- Card reader
8- Hot air outlet of the manual dryer
9- Manual water outlet
10- Front wheels with a brake
11- Rear wheels without a brake
12- Manual dryer
13- Shampoo and bactericide pumps
14- Solenoid valve (normally closed)
15- Solenoid valve (normally open)
16- Plumbing assembly
17- Electrical panel
18- Water heater
19- Pressure switch valve
20- Water inlet

### DESCRIPTION OF A PREFERRED EMBODIMENT

A preferred embodiment of the automatic or manual bathing cubicle for pets with ozonised water, which is the object of the present invention, referring to the reference numbers, may be based on a cubicle comprising an upper cover (1) and a lower cover (2) equipped with hinges to allow the user to insert the animal and position it for bathing; for this purpose, there is a range of three sizes: Small side, medium side or XL (5) and large side. There is a service door (3) arranged at the bottom. An emergency stop button (6) stops the washing if there is a risk. A touch screen (4) connected to a computer allows users to programme the bath, while an RFID technology card reader (7) allows for payment and registration of the bath. For managing manual drying, it comprises a hot air outlet (8) to which the manual dryer nozzle is attached, and for managing manual bathing, it comprises a hot water outlet (9) to which a water dispensing gun is attached. If these manual controls (8 and 9) are not used, the washing process is automatic.

In the automatic process, water is distributed by pressure diffusers that generate a water spray and are actuated by solenoid valves (14 and 15), comprising an ozone generator, said ozone being injected and mixed with the water by means of a venturi. This process changes the properties of the water, the ozone penetrating the dermis of the animal. The cubicle can dispense three types of shampoo (13) that can be programmed by a touch screen (5) according to the coat and needs of the animal. Before the bath begins, the cubicle undergoes a bactericidal disinfection process as a hygiene measure ensuring that any potential harmful germs are eliminated. Both the shampoos and the bactericidal disinfectant are injected through 4 independent dosing pumps (13).

The automatic drying system consists of 2 turbines and 2 resistors that heat the air to an electronically controlled temperature, this drying process generates 62% less noise than a standard dog grooming dryer, allowing the dog to enjoy its bath while reducing stress during the process. If the manual dryer (12) is to be activated, one of the hot water outlets (8), through which hot air exits through a tube and a drying nozzle, is activated.

The computer software controls the operation through a control PCB which activates the various components throughout the washing cycle, such as presence sensors, door sensors, the ozone generator, the solenoid valves (14 and 15) to allow the passage of water or to shut it off, the drain pump, the float switch, RGB LEDs, temperature resistors, temperature sensors and dryers. The plumbing assembly (16) comprises a pressure switch valve (19) for the water inlet (20), a thermostatic valve and a water heater (18). An electrical panel (17) distributes power and protects the electrical system of the cubicle.

## Claims

1. An automatic or manual bathing cubicle for pets with ozonised water, consisting of a cubicle comprising an upper cover (1) and another lower cover (2) equipped with hinges to allow the user to insert the animal and position it for bathing, and a service door, **characterised in that** it comprises an emergency stop button (6) which stops the washing if there is a risk, as well as comprising a touch screen (4) connected to a computer for programming the bath and an RFID technology card reader (7) for payment and registration of the bath, and a hot air outlet (8) to which a manual dryer nozzle is attached, as well as a hot water outlet (9) for managing manual bathing, to which a manual hot water dispensing gun is attached, and **in that** the water in the automatic washing process is distributed by pressure diffusers that generate a water spray and are actuated by solenoid valves (14 and 15), comprising an ozone generator, said ozone being injected into and mixed with the water by means of a venturi, the ozone thus penetrating the dermis of the animal.

2. The automatic or manual bathing cubicle for pets with ozonised water according to claims 1 and 2, **characterised in that** the cubicle can dose three types of shampoo (13) that can be programmed by a touch screen (5) according to the coat and needs of the animal.

3. The automatic or manual bathing cubicle for pets with ozonised water according to claims 1 and 2, **characterised in that** the cubicle can dose three types of shampoo (13) that can be programmed by a touch screen (5) according to the coat and needs of the animal, now R2.

4. The automatic or manual bathing cubicle for pets with ozonised water according to claims 1 to 8, **characterised in that** both the shampoos and the bactericidal disinfectant are injected through 4 independent dosing pumps (13).

5. The automatic or manual bathing cubicle for pets with ozonised water according to claims 1 to 9, **characterised in that** the automatic drying system consists of 2 turbines and 2 resistors that heat the air to an electronically controlled temperature.

6. The automatic or manual bathing cubicle for pets with ozonised water according to claims 1 to 10, **characterised in that** the manual dryer (12) is activated by starting up one of the dryers (8) through which hot air exits through a tube and a drying nozzle.

7. The automatic or manual bathing cubicle for pets with ozonised water according to claims 1 to 11, **characterised in that** the computer software controls operation through a control PCB which activates the various components throughout the washing cycle, such as presence sensors, door sensors, the ozone generator, the solenoid valves (14 and 15) to allow the passage of water or to shut it off, the drain pump, the float switch, RGB LEDs, temperature resistors, temperature sensors and dryers, the plumbing assembly (16) comprising a pressure switch valve (19) for the water inlet (20), a thermostatic valve and a water heater (18), with an electrical panel (17) that distributes power and protects the electrical system of the cubicle.
